# FASCICULE DE BREVET EUROPEEN

(11) **EP 2 724 037 B1**
(45) Date de publication et mention de la délivrance du brevet: **10.08.2016**
(21) Numéro de dépôt: 12713226.4
(22) Date de dépôt: 13.03.2012
(51) Int. Cl.: F16C 9/02, F16C 35/00, F16F 7/00

(54) **CHAPEAU DE PALIER DE VILEBREQUIN AVEC PILIERS OPTIMISES**
KURBELWELLENLAGERDECKEL MIT OPTIMIERTEN SÄULEN
CRANKSHAFT BEARING CAP WITH OPTIMIZED PILLARS

(30) Priorité: 27.06.2011 FR 1155708
(43) Date de publication de la demande: 30.04.2014
(73) Titulaire: Renault S.A.S., 92100 Boulogne-Billancourt (FR)
(72) Inventeur: VINCENT, Franck, F-94100 Saint Maur Des Fosses (FR); MIAZGA, Didier, F-95150 Taverny (FR)
(86) Numéro de dépôt international: PCT/FR2012/050513
(87) Numéro de publication internationale: WO 2013/001181

(56) Documents cités:
- EP-A1- 2 615 316
- WO-A2-2007/033139
- FR-A1- 2 878 588
- US-A1- 2010 180 853
- US-B2- 7 384 196

## Description

### Domaine technique auquel se rapporte l'invention

La présente invention concerne les chapeaux de paliers de vilebrequin et plus particulièrement la fixation de ces chapeaux de palier.

L'invention concerne également les moteurs à combustion interne comprenant un vilebrequin dont l'axe est entouré par un palier et un chapeau de palier.

### Etat de la technique antérieure

Le chapeau de palier de vilebrequin est soumis à des contraintes importantes en particulier dans la zone se trouvant à proximité des piliers de fixation du chapeau de palier et au niveau desdits piliers eux-mêmes, contraintes pouvant engendrer des amorces de rupture et entrainer des défaillances de la pièce et en conséquence du moteur. Il est donc nécessaire de renforcer ledit chapeau et de renforcer sa résistance en fatigue. La pièce étant issue de moulage de fonte, ceci a pour conséquence généralement d'augmenter la masse du chapeau de palier et en partie celle des piliers, ce qui va à l'encontre des efforts de diminution de la masse de chaque composant pour réduire la consommation énergétique du moteur et/ ou du véhicule ou de privilégier des matériaux plus onéreux pour le moulage dudit chapeau de palier.

La publication FR2878588 B1 divulgue un chapeau de pilier de vilebrequin présentant la forme d'un demi-cylindre dont l'axe est confondu avec l'axe du vilebrequin, comportant une surface convexe externe et comportant à chacune de ses extrémités un pilier de fixation, la zone de liaison entre la surface externe du demi-cylindre et lesdits piliers de fixation est optimisée du point de vue géométrique pour améliorer la résistance à la fatigue tout en diminuant la masse. Le document ne divulgue aucune règle de réalisation concernant le pilier de fixation.

La publication US7384196 B2 divulgue un chapeau de palier de vilebrequin présentant une forme de demi-cylindre surmontée d'une portion d'arête cylindrique et comportant à chacune de ses extrémités un pilier de fixation de forme sensiblement cylindrique qui est rattaché au demi-cylindre par une bretelle, la section du demi-cylindre ainsi que celle de ladite bretelle étant optimisées du point de vue géométrique. Le document ne divulgue aucune règle de réalisation concernant le pilier de fixation.

La publication US 2010/180853- A1 divulgue un chapeau de palier comportant deux piliers à chacune des extrémités dudit chapeau, chaque pilier comportant une surface supérieure sensiblement ovale et deux rainures verticales.

La publication WO 2007/033139 - A2 présente un chapeau de palier comportant quatre piliers de fixation.

### Objet de l'invention

Un but de l'invention est une optimisation de la forme des piliers de chapeau de palier et l'invention a pour objet un chapeau de palier présentant une forme de demi-cylindre comportant des piliers de fixation diamétralement opposés avec un profil optimisé avec une réduction de la masse des piliers tout en améliorant la résistance en fatigue du chapeau de palier.

Le chapeau de palier de vilebrequin selon l'invention est décrit dans la revendication 1.

Le chapeau de palier de vilebrequin comporte une forme semi-cylindrique comportant à chacune de ses extrémités un pilier de fixation sous la forme d'une colonne sensiblement ovale légèrement évasée à la base qui comporte au moins deux rainures latérales sur au moins une portion de la hauteur du pilier. Lesdites rainures réduisent la masse des piliers de fixation et participent à l'amélioration de leur résistance en fatigue.

Selon l'invention, les piliers de fixation comportent au moins deux rainures qui sont disposées hors d'un cylindre vertical d'appui dont la base est égale à la surface d'appui de la tête de vis et hors d'un volume défini par le plan transversal passant par les axes des trous de fixation et s'étendant symétriquement selon la direction X sur une longueur e. Les valeurs de tenue en fatigue sont avantageusement préservées ou améliorées.

Les rainures sont issues depuis la base du pilier et se prolongent sur au moins une portion de la hauteur du pilier. Une surface à la base du pilier est ainsi avantageusement dégagée.

Avantageusement, les rainures sont réalisées de façon symétrique par rapport à un plan transversal et vertical médian passant par l'axe de fixation. Le processus de fabrication est fiabilisé.

Le profil des rainures varie depuis leur extrémité basse à leur extrémité haute. La profondeur qui est une dimension de la rainure peut varier de l'extrémité basse à l'extrémité haute de la rainure.

Avantageusement, les rainures sont réalisées lors du moulage du chapeau de palier.

D'autres aspects de l'invention vont être présentés dans la description suivante en regard des dessins annexés, donnée à titre d'exemple non limitatif, dans le seul but de bien comprendre l'invention et comment elle peut être réalisée.

### Description des dessins

La figure 1 est une vue de coupe selon la section AA de la figure 3 du chapeau de palier de vilebrequin.
La figure 2 est une vue en perspective d'un chapeau de palier de l'état de l'art.
La figure 3 est une vue de dessus du chapeau de palier.
La figure 4 est une vue de dessus d'une extrémité du chapeau de palier de l'état de l'art.
La figure 5 est une vue en perspective d'un chapeau de palier selon l'invention.
Les figures 6 et 7 sont des vues de dessus d'une extrémité du chapeau de palier selon deux modes de réalisation différents de l'invention.

### Exposé de modes de réalisation de l'invention

Les descriptions qui suivent se réfèrent à l'axe longitudinal X confondu avec l'axe du vilebrequin, l'axe transversal Y et l'axe vertical Z.

Les mêmes pièces apparaissant dans diverses figures gardent les mêmes références.

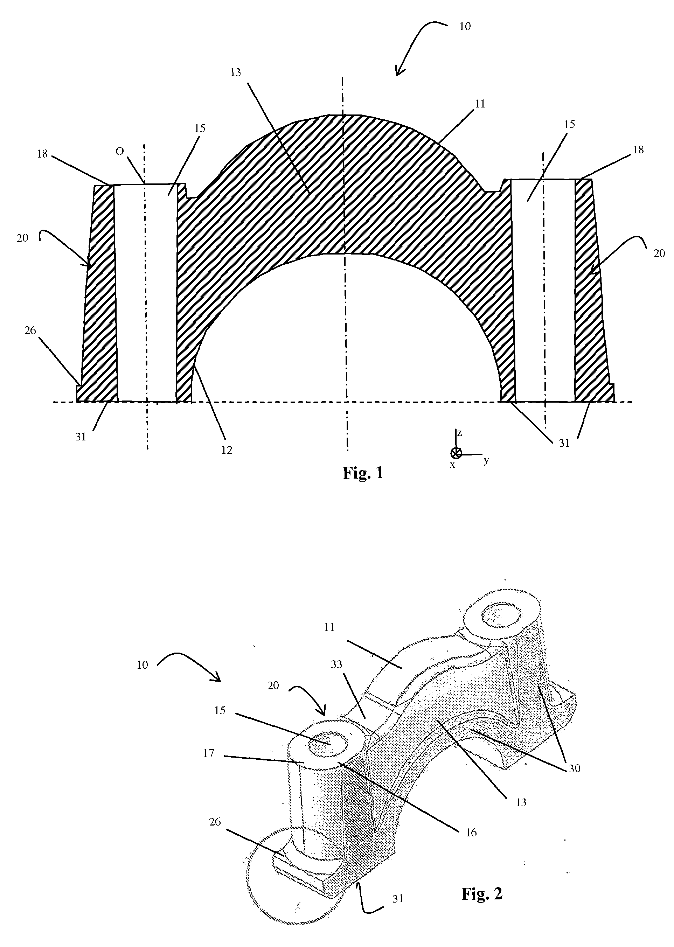

La figure 1 présente une vue de coupe d'un chapeau de palier 10 selon l'état de l'art, qui comprend une forme semi-cylindrique 13 avec une surface supérieure externe 11 et une surface inférieure interne 12 destinée à être au contact avec le vilebrequin (non présenté), ladite forme cylindrique comprend deux piliers de fixation 20 diamétralement opposés. Chaque pilier de fixation est en forme de colonne et repose sur un talon 26 sensiblement parallélépipédique. Selon la figure 1, le chapeau de palier comprend un pilier de fixation 20 disposé à chacune des extrémités dudit chapeau.

Le chapeau de palier est issu de moulage fonte essentiellement, en grappes ou en individuel. Le moulage en grappes consiste à réaliser tous les chapeaux de palier en une pièce, le nombre de chapeaux de paliers étant égal au nombre de cylindres du moteur plus un, pour un moteur donné en une fois. La pièce issue du démoulage présentant alors plusieurs chapeaux de paliers juxtaposés selon un côté transversal est ensuite tronçonnée pour obtenir la série de chapeaux de paliers. Le chapeau de palier peut également être issu d'un moulage fonte en individuel.

Le moule comporte un premier moule sable pour l'empreinte externe qui réalise la surface externe 11 du chapeau et un deuxième moule pour l'empreinte intérieure qui réalise la surface interne du chapeau qui comprend la surface inférieure 12 de la forme semi-cylindrique du chapeau de palier prolongée par la surface intérieure des piliers et du talon sensiblement parallélépipédique. Le chapeau de palier après démoulage subit des usinages pour la réalisation des flancs 30, de la surface supérieure externe 11 du pilier, de la surface inférieure 31 du pilier destinée au contact avec un élément d'un carter cylindre (non représenté) ou de pied de palier (non représenté), des trous de passage 15 pour des vis de fixations (non représentés) et de l'évidement semi-cylindrique 12 adapté à entourer une partie de l'axe du vilebrequin.

Le pilier est de forme générale tronconique pour faciliter le démoulage du chapeau de palier.

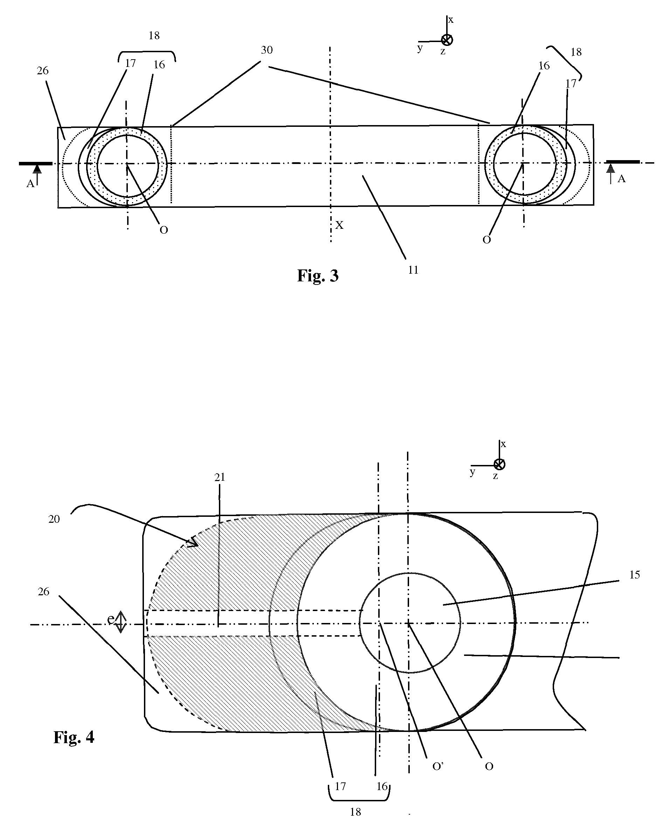

Les figures 3 à 5 montrent un chapeau de palier selon l'invention comprenant une surface supérieure 18 de pilier sensiblement oblongue. Le pilier est traversé par une ouverture circulaire 15 selon l'axe vertical Z pour le passage de la vis de fixation, l'axe du trou ainsi formé passe par le centre O d'une surface circulaire 16 de contact avec la tête de vis de fixation et dénommée surface d'appui. La surface supérieure 18 peut se décomposer en la surface d'appui 16 et une seconde surface 17 dont les deux cercles d'extrémité, de même rayon et de centres O et O', s'intersectent, la distance entre les deux centres étant de quelques millimètres. La surface circulaire 17 est décalée selon l'axe transversal Y, par rapport à la surface d'appui 16 vers l'extrémité libre du pilier. La masse supplémentaire engendrée par la seconde surface circulaire 17 participe à l'amélioration de la tenue en fatigue du chapeau de palier 10.

Selon l'invention, deux rainures 22,23 sont obtenues de manière préférentielle directement lors du moulage sur la surface latérale extérieure du pilier. Elles sont réalisées de telle façon qu'elles n'interfèrent pas avec un cylindre dit cylindre d'appui dont la base est égale à la surface d'appui (16) sur toute la hauteur du pilier. Elles sont sensiblement verticales et symétriques par rapport à un plan transversal [YZ] passant par les axes des trous de fixation. Par ailleurs, les rainures sont situées hors d'une zone 21 d'un volume défini par le plan transversal et s'étendant symétriquement selon la direction X, ladite zone participant à la résistance en fatigue du chapeau de palier. Cette zone s'étend sur une longueur e de quelques millimètres de part et d'autre dudit plan transversal. Le profil des rainures est défini par le profil de l'entaille formée dans le pilier selon une vue de dessus d'une coupe horizontale. Le cylindre d'appui et ledit volume forment un volume de sécurité. Le profil des rainures symétriques par rapport à l'axe transversal permet également de fiabiliser le processus de fabrication.

La rainure débute depuis la base du pilier et se prolonge au moins sur une portion de la hauteur du pilier. Une surface est ainsi dégagée à la base dudit pilier sur le talon. La rainure peut également se poursuivre selon une ligne sensiblement droite jusqu'à la surface supérieure 18 du pilier en suivant une inclinaison comprise entre la verticale Z et la ligne d'inclinaison de la surface latérale extérieure du pilier, et de telle façon que son profil n'interfère pas avec le volume de sécurité.

Le profil de la rainure varie depuis la base du pilier jusqu'à une extrémité haute de la rainure. La profondeur de ladite rainure peut par exemple varier d'une extrémité basse à une extrémité haute de la rainure.

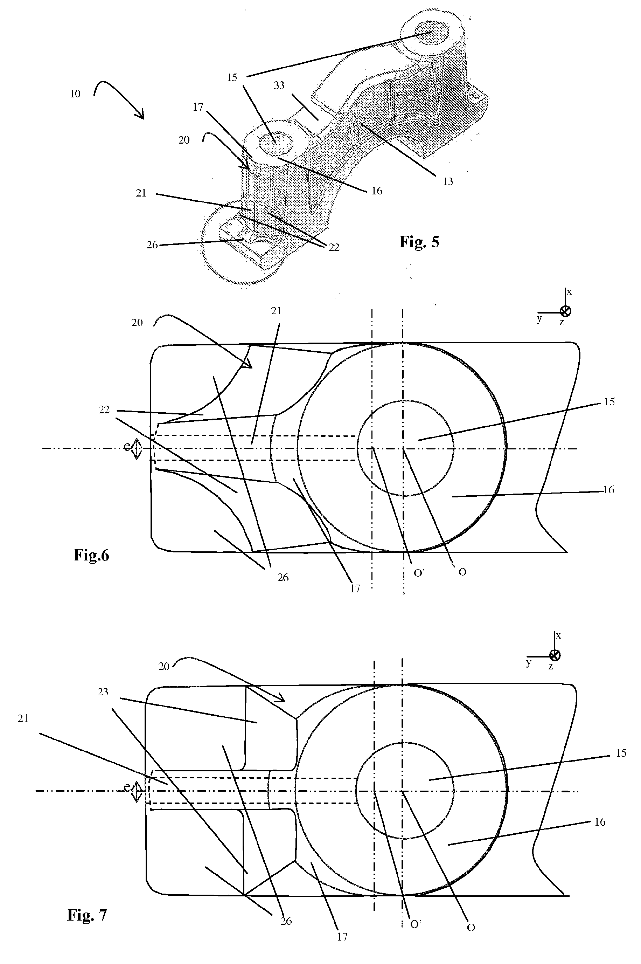

Les figures 5 et 6 présentent un profil des rainures 22 sensiblement en arc de cercle. Le profil de la rainure selon un plan horizontal n'interfère pas sur les projections sur ledit plan horizontal avec le volume de sécurité. La rainure 22 est obtenue brute du moulage par l'ajout sur l'empreinte de sable externe (non représentée) d'un bossage sensiblement semi-cylindrique sur au moins une portion de la hauteur du pilier.

La figure 7 présente un profil des rainures 23 à coin carré, le profil selon un plan horizontal est compris entre un segment longitudinal et un segment transversal, les deux segments sont tels que leur intersection n'interfère pas sur les projections sur ledit plan horizontal du volume de sécurité. Ce profil de rainure correspond à une réduction importante de la masse des piliers 20 tout en améliorant la résistance en fatigue des chapeaux de paliers qui comprennent ces piliers. La rainure 23 est obtenue brute du moulage par l'ajout sur l'empreinte de sable externe (non représentée) d'un bossage sensiblement à coin carré sur au moins une portion de la hauteur dudit pilier 20.

Les chapeaux de paliers doivent vérifier des seuils de tenue en fatigue. La tenue en fatigue des chapeaux de paliers dépend du profil de la zone de raccordement 33 entre le dos du chapeau de palier et le pilier dudit chapeau ainsi que du profil dudit pilier. Plusieurs documents dont ceux issus des Techniques de l'Ingénieur (BM 5 044-2 Méthode VDI) et de la conférence des journées de la fonderie de Strasbourg du 19 septembre 2005 font état de calculs d'un facteur de sécurité en fatigue (FSF) de pièces moulées à partir des limites de fatigue et de dispersions du matériau qui les compose. Le facteur de sécurité en fatigue à grand nombre de cycles permet de caractériser la tenue en fatigue de la pièce pour un matériau donné. Plus ladite valeur est importante, meilleure est la tenue en fatigue de la pièce. Des chapeaux de palier avec des piliers sans rainures et des piliers avec rainures selon l'invention sont comparés selon ledit facteur. Ce facteur marque une amélioration, passant d'une valeur de 1,25 pour un pilier sans rainures à 1,27 pour un pilier avec rainures selon les profils décrits précédemment. L'enlèvement de matière des piliers améliore donc également la tenue en fatigue du chapeau de palier. Ce résultat va à l'encontre de l'hypothèse selon laquelle une diminution de masse du pilier peut entrainer une dégradation des performances mécaniques du chapeau de palier, notamment de sa tenue en fatigue.

L'invention permet une optimisation de la masse du pilier de chapeau de palier de vilebrequin. Le pilier selon l'invention est de forme de colonne avec une surface supérieure oblongue. Ladite colonne comporte des rainures qui participent à la réduction de la masse du pilier ainsi qu'à l'amélioration de la tenue en fatigue du chapeau de palier, en complément du respect des règles décrites dans la publication FR2878588.

L'invention n'est pas limitée aux modes de réalisation présentés ci-dessus. D'autres profils de rainure peuvent être obtenus directement par moulage dans le but de réduire la masse des piliers et du chapeau de palier tout en préservant voire améliorant les tenues en fatigue desdits piliers. Le profil de rainure peut être par exemple trapézoïdal.

## Revendications

1. Chapeau de palier de vilebrequin (10) présentant la forme d'un demi-cylindre (13) d'axe X confondu avec l'axe du vilebrequin et comportant des piliers de fixation (20) diamétralement opposés, chaque pilier de forme de colonne, disposé à chacune des extrémités dudit chapeau de palier et reposant sur un talon (26) sensiblement parallélépipédique, comporte une surface supérieure (18) sensiblement ovale intégrant une surface d'appui (16) entourant un unique trou de passage (15) pour une vis de fixation ainsi qu'une surface d'appui de la tête de vis, ladite surface entourant le trou de passage (15), ledit pilier de fixation (20) à une extrémité du chapeau de palier comportant au moins deux rainures verticales sur la surface latérale extérieure du pilier, issues depuis la base du pilier sur le talon (26) et se prolongeant sur une portion de la hauteur du pilier, dégageant ainsi une surface à la base dudit pilier sur le talon, les rainures étant disposées hors d'un cylindre vertical d'appui dont la base est égale à la surface d'appui (16) et hors d'un volume défini par le plan transversal passant par les axes des trous de fixation et s'étendant symétriquement selon la direction X sur une longueur e.

2. Chapeau de palier de vilebrequin selon la revendication 1, **caractérisé en ce que** le profil des rainures est symétrique par rapport à un axe transversal.

3. Chapeau de palier de vilebrequin selon la revendication 2, **caractérisé en ce que** le profil des rainures varie depuis leur extrémité basse à leur extrémité haute.

4. Chapeau de palier de vilebrequin selon la revendication 3, **caractérisé en ce que** le profil des rainures est en arc de cercle.

5. Chapeau de palier de vilebrequin selon la revendication 4, **caractérisé en ce que** les rainures sont réalisées lors du moulage dudit chapeau de palier.

6. Moteur à combustion interne comprenant un vilebrequin maintenu selon l'axe de rotation par des paliers et chapeaux de paliers selon l'une quelconque des revendications 1 à 5.

## Patentansprüche

1. Kurbelwellenlagerdeckel (10), der die Form eines Halbzylinders (13) mit einer Achse X, die mit der Achse der Kurbelwelle zusammenfällt, aufweist und diametral gegenüberliegende Befestigungspfosten (20) umfasst, wobei jeder säulenförmige Pfosten an jedem der Enden des Lagerdeckels angeordnet ist und auf einem im Wesentlichen parallelepipeden Ansatz (26) ruht und eine im Wesentlichen ovale obere Fläche (18) mit einer Stützfläche (16) umfasst, die ein einziges Durchgangsloch (15) für eine Befestigungsschraube umgibt, sowie eine Fläche zum Stützen des Schraubenkopfs, wobei die Fläche das Durchgangsloch (15) umgibt, wobei der Befestigungspfosten (20) an einem Ende des Lagerdeckels mindestens zwei vertikale Rillen an der äußeren Seitenfläche des Pfostens umfasst, die von der Basis des Pfostens am Ansatz (26) ausgehen und sich an einem Abschnitt der Höhe des Pfostens fortsetzen und somit eine Fläche an der Basis des Pfostens am Ansatz freilegen, wobei die Rillen außerhalb eines vertikalen Stützzylinders angeordnet sind, dessen Basis gleich der Stützfläche (16) ist, und außerhalb eines Volumens, das durch die Querebene definiert ist, die durch die Achsen der Befestigungslöcher geht und sich symmetrisch in der Richtung X über eine Länge e erstreckt.

2. Kurbelwellenlagerdeckel nach Anspruch 1, **dadurch gekennzeichnet, dass** das Profil der Rillen zu einer Querachse symmetrisch ist.

3. Kurbelwellenlagerdeckel nach Anspruch 2, **dadurch gekennzeichnet, dass** das Profil der Rillen von ihrem unteren Ende bis zu ihrem oberen Ende variiert.

4. Kurbelwellenlagerdeckel nach Anspruch 3, **dadurch gekennzeichnet, dass** das Profil der Rillen kreisbogenförmig ist.

5. Kurbelwellenlagerdeckel nach Anspruch 4, **dadurch gekennzeichnet, dass** die Rillen beim Abformen des Lagerdeckels realisiert werden.

6. Verbrennungsmotor, umfassend eine durch Lager gemäß der Rotationsachse gehaltene Kurbelwelle und Lagerdeckel nach einem der Ansprüche 1 bis 5.

## Claims

1. Crankshaft bearing cap (10) which has a semicylindrical form (13), which has an axis X coinciding with the crankshaft axis and includes diametrically opposed fixing pillars (20), each column-shaped pillar, disposed at each of the ends of said bearing cap and resting on a substantially parallelepipedic base portion (26), has a substantially oval upper surface (18), which upper surface (18) integrates a support surface (16) surrounding a single through-hole (15), through which a fixing screw can pass, with a single surface for supporting the screw head, said surface surrounding the through-hole (15), said fixing pillar (20) at one end of the bearing cap having at least two vertical grooves on the outer lateral surface of the pillar, starting from the base of the pillar on the base portion (26) and extending over a portion of the height of the pillar, thus opening up a surface at the base of said pillar on the base portion, the grooves being disposed outside a vertical support cylinder the base of which is equal to the support surface (16), and outside a volume defined by the transverse plane passing through the axes of the fixing holes and extending symmetrically in the direction X over a length e.

2. Crankshaft bearing cap according to Claim 1, **characterized in that** the profile of the grooves is symmetrical with respect to a transverse axis.

3. Crankshaft bearing cap according to Claim 2, **characterized in that** the profile of the grooves varies from their lower end to their upper end.

4. Crankshaft bearing cap according to Claim 3, **characterized in that** the profile of the grooves forms an arc of a circle.

5. Crankshaft bearing cap according to Claim 4, **characterized in that** the grooves are produced during the casting of said bearing cap.

6. Internal combustion engine including a crankshaft supported on its axis of rotation by bearings and bearing caps according to any one of Claims 1 to 5.
